# EUROPÄISCHE PATENTSCHRIFT

(11) **EP 3 655 175 B1**
(45) Veröffentlichungstag und Bekanntmachung des Hinweises auf die Patenterteilung: **30.08.2023**
(21) Anmeldenummer: 18732709.3
(22) Anmeldetag: 13.06.2018
(51) Int. Cl.: B21D 28/34, B21D 28/16, B21D 28/26, B21D 55/00, B26D 5/00, G01B 11/24, G01B 11/28, G01N 21/956

(54) **VERFAHREN ZUM BETRIEB EINER BEARBEITUNGSANLAGE MIT BEWEGLICHEM STEMPEL**
METHOD FOR OPERATING A PROCESSING INSTALLATION WITH A MOVABLE PUNCH
PROCÉDÉ DE FONCTIONNEMENT D'UNE INSTALLATION D'USINAGE ÉQUIPÉE D'UN PISTON MOBILE

(30) Priorität: 18.07.2017 DE 102017212253
(43) Veröffentlichungstag der Anmeldung: 27.05.2020
(73) Patentinhaber: Donhauser, Christian, 87487 Wiggensbach (DE)
(72) Erfinder: LORENZ, Maximilian, 87787 Wolfertschweden (DE); MENZL, Matthias, 87629 Füssen (DE); LAYH, Michael, 87452 Altusried (DE); DONHAUSER, Christian, 87487 Wiggensbach (DE); PINZER, Bernd, 87439 Kempten (DE)
(74) Vertreter: Hoefer & Partner Patentanwälte mbB
(86) Internationale Anmeldenummer: PCT/EP2018/065683
(87) Internationale Veröffentlichungsnummer: WO 2019/015887

(56) Entgegenhaltungen:
- EP-A1- 1 970 667
- JP-A- H0 579 991
- US-A- 4 845 763
- US-A1- 2003 053 045

## Beschreibung

Die Erfindung betrifft ein Verfahren zum Betrieb einer Bearbeitungsanlage mit beweglichem Stempel. Mit dem Stempel wird ein Werkstück getrennt, insbesondere durch Stanzen oder Stanz-Räumen.

Die hier betrachtete Bearbeitungsanlage umfasst zumindest eine Bearbeitungsmaschine mit beweglichem Stempel zum Trennen, vorzugsweise Stanzen oder Stanz-Räumen, eines Werkstücks. Die Bearbeitungsmaschine trennt, beispielsweise ein Blech, in zumindest einen Stanzstreifen und zumindest ein Stanzstück. Im Stand der Technik wird zur Auswertung der Beschaffenheit der erzeugten Schnittfläche der Stanzstreifen bzw. das Stanzstück aus der Bearbeitungsanlage entnommen. Die Untersuchung der Schnittfläche erfolgt somit außerhalb der Bearbeitungsanlage und nicht im Takt mit der arbeitenden Bearbeitungsanlage. Ähnlich verhält es sich mit der Auswertung der Beschaffenheit der Schneidkante des Stempels. Auch der Stempel wird im Stand der Technik zur Untersuchung aus der Bearbeitungsmaschine entnommen.

EP 1 970 667 A1 zeigt ein Verfahren sowie eine Vorrichtung zur Überprüfung der Beschaffenheit des in Form einer Werkstücköffnung vorliegenden Ergebnisses einer Blechbearbeitung. Zum Erfassen der Werkstücköffnung wird hier beispielsweise ein Lichtstrahl eingesetzt.

JP H05 79991 A zeigt ein Verfahren zum Erfassen des Verschleißes an einem Werkzeug.

Es ist eine Aufgabe der Erfindung, ein Verfahren zum Betrieb einer Bearbeitungsanlage anzugeben, das es ermöglicht, mit der Bearbeitungsanlage effizient qualitativ hochwertige Bauteile herzustellen.

Die Lösung dieser Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch ein Verfahren zum Betrieb einer Bearbeitungsanlage mit einer ersten Bearbeitungsmaschine. Die erste Bearbeitungsmaschine umfasst zumindest einen beweglichem Stempel zum Trennen, vorzugsweise Stanzen oder Stanz-Räumen, eines Werkstücks. Die "Bearbeitungsanlage" umfasst zumindest die hier beschriebene erste Bearbeitungsmaschine, kann jedoch noch weitere Bearbeitungsmaschinen, beispielsweise zum Biegen, Gewindebohren, Gewindeformen, Fräsen, Bohren und/oder Drehen, und/oder weitere Elemente, beispielsweise zum Transportieren des Werkstücks innerhalb der Bearbeitungsanlage, umfassen.

Der Ausdruck "Werkstück" wird hier als Oberbegriff für das Ausgangsmaterial (z.B. Blech), den Stanzstreifen und das Stanzstück verwendet. Mit dem zumindest einen Stempel der ersten Bearbeitungsmaschine wird das Werkstück getrennt. Wenn der Stempel zum Stanzen ausgebildet ist, erfolgt die Trennung des Werkstücks in Stanzstreifen und Stanzstück.

Allerdings wird im Rahmen vorliegender Erfindung auch das Stanz-Räumen den trennenden Verfahren mit einem Stempel zugeordnet. Beim Stanz-Räumen wird die Schnittfläche nach dem Stanzen durch einen Stempel mit entsprechender Schneidkante nachbearbeitet. Wenn der Stempel zum Stanz-Räumen ausgebildet ist, erfolgt die "Trennung" in Späne und Stanzstreifen bzw. Stanzstück. Die Schneidkante für das Stanz-Räumen kann sich am gleichen Stempel befinden, mit dem auch das Stanzen durchgeführt wird. Ferner ist es möglich, für das Stanz-Räumen einen eigenen Stempel zu verwenden. Für das Stanz-Räumen werden gleiche o. ä. Bearbeitungsmaschinen verwendet, wie für das Stanzen. Die Offenlegungsschrift DE 199 48 857 A1 zeigt eine beispielhafte Vorrichtung zum Stanz-Räumen.

Im Rahmen des erfindungsgemäßen Verfahrens erfolgt mit zumindest einer Sensoreinheit ein berührungsloses Erfassen der Kontur der Schnittfläche am Werkstück. Dabei handelt es sich um die durch den Stempel erzeugte Kontur am Werkstück. Die Schnittfläche befindet sich entweder am Stanzstreifen oder Stanzstück. Das Erfassen der Kontur der Schnittfläche erfolgt vorzugsweise über ein optisches Verfahren. Mögliche optische Verfahren zum Erfassen der Kontur werden noch im Detail beschrieben.

Erfindungsgemäß ist vorgesehen, dass das Erfassen "inline" in der Bearbeitungsanlage erfolgt. Somit wird die Schnittfläche erfasst, ohne dass das Werkstück (Stanzstreifen oder Stanzstück) mit der zu erfassenden Schnittfläche aus der Bearbeitungsanlage entnommen wird.

Die "Bearbeitungsanlage" umfasst in einer einfachen Ausgestaltung nur die erste Bearbeitungsmaschine, insbesondere mit einer Transportanordnung zum Zuführen des Werkstücks in die Bearbeitungsmaschine und zum Abführen des Werkstücks (Stanzstreifen und/oder Stanzstück) aus der Bearbeitungsmaschine. Darüber hinaus kann die Bearbeitungsanlage noch weitere nachgeordnete Bearbeitungsmaschinen umfassen. Entscheidend ist, dass innerhalb der hier definierten "Bearbeitungsanlage" der Stanzstreifen und das Stanzstück geordnet und im Takt des Stempels bewegt werden. Solange diese Elemente geordnet vorliegen und im Takt bewegt werden bzw. zwischen zwei getakteten Bewegungen ruhen, befinden sie sich definitionsgemäß in der "Bearbeitungsanlage". Sobald der Stanzstreifen bzw. das Stanzstück den getakteten Ablauf verlassen und/oder beispielsweise einer Schüttgutbevorratung zugeführt werden, verlassen sie die "Bearbeitungsanlage". Das erfindungsgemäße Erfassen der Kontur der Schnittfläche erfolgt innerhalb der hier definierten "Bearbeitungsanlage" und somit inline im Produktionsablauf.

Es können auch mehrere Sensoreinheiten verwendet werden, um sowohl am Stanzstreifen als auch am Stanzstück die Schnittfläche zu erfassen. Ferner ist es auch vorgesehen, die Schnittfläche am Stanzstreifen mit mehreren Sensoreinheiten zu erfassen. Ebenso ist es auch möglich, die Schnittfläche am Stanzstück mit mehreren Sensoreinheiten zu erfassen.

Im Anschluss an das Erfassen der Kontur der Schnittfläche erfolgt ein Auswerten der Beschaffenheit der Schnittfläche basierend auf den durch die Sensoreinheit erfassten Daten. Basierend auf der ausgewerteten Beschaffenheit der Schnittfläche können unterschiedliche Rückschlüsse gezogen werden: beispielsweise ist es möglich, basierend auf der Schnittfläche die Qualität der produzierten Teile zu beurteilen, was beispielsweise zu einer Ausmusterung einzelner Teile führt. Des Weiteren ist vorgesehen, basierend auf der Schnittfläche auf die Qualität der Schneidkante des Stempels zu schließen. Dadurch kann ein Verschleiß der Schneidkante ermittelt werden. Ferner kann basierend auf der Beschaffenheit der Schnittfläche die Bearbeitungsanlage bzw. die Bearbeitungsmaschine anderweitig angesteuert werden: beispielsweise kann der Takt der Bearbeitungsmaschine verändert werden. Die erfindungsgemäße Inline-Messung ermöglicht es, während der Produktion mit der Bearbeitungsanlage die Beschaffenheit der Schnittfläche zu ermitteln, die beschriebenen Rückschlüsse zu ziehen und entsprechende Maßnahmen inline zu ergreifen.

Besonders bevorzugt ist vorgesehen, die mit der zumindest einen Sensoreinheit erfassten Daten in einer Recheneinheit auszuwerten. Besonders bevorzugt erfolgt eine Ansteuerung der Bearbeitungsanlage, insbesondere der ersten Bearbeitungsmaschine, durch die Recheneinheit und basierend auf der ausgewerteten Beschaffenheit der Schnittfläche.

Vorzugsweise ist vorgesehen, dass die Sensoreinheit die Kontur der Schnittfläche im Takt mit der die Trennung ausführenden Bewegung des Stempels erfasst. So erfolgt das Erfassen durch die Sensoreinheit während das Werkstück im Takt bewegt wird und/oder zwischen zwei getakteten Bewegungen. Der Stempel der ersten Bearbeitungsmaschine wird beispielsweise in einem Takt von 50 pro Minute oder schneller bewegt. Besonders bevorzugt erfasst die Sensoreinheit die Kontur zumindest bei jedem 100-ten Takt, vorzugsweise zumindest bei jedem 50-ten Takt, besonders vorzugsweise zumindest bei jedem 10-ten Takt, weiter vorzugsweise zumindest bei jedem Takt.

Für die Erfassung der Schnittfläche am Stanzstreifen ist insbesondere folgendes vorgesehen: Das Werkstück wird in der Bearbeitungsanlage mit einer Transportanordnung durch die erste Bearbeitungsmaschine transportiert. Nach der ersten Bearbeitungsmaschine wird der Stanzstreifen zu einer weiteren Bearbeitungsmaschine oder einem Ende der Bearbeitungsanlage transportiert. Die Sensoreinheit erfasst die Kontur der Schnittfläche, während der Stanzstreifen mittels der Transportanordnung bewegt wird und/oder auf der Transportanordnung zwischen zwei getakteten Bewegungen ruht. Der Stanzstreifen wird also nicht von der Transportanordnung entfernt, um das Erfassen der Schnittfläche durchzuführen.

Grundsätzlich kann die zumindest eine Sensoreinheit innerhalb der Bearbeitungsanlage fest oder beweglich angeordnet werden. Ist die Sensoreinheit fest angeordnet, bewegt sich vorzugsweise das Werkstück beim Erfassen der Schnittfläche an der Sensoreinheit vorbei. Wenn die Sensoreinheit beweglich angeordnet ist, kann das Werkstück beim Erfassen der Schnittfläche stillstehen oder sich ebenfalls bewegen.

Gemäß einer Ausgestaltung ist vorgesehen, dass die Sensoreinheit zum Erfassen der Schnittfläche bewegt wird. Insbesondere erfolgt diese Bewegung parallel zur Schnittflächenachse und/oder abgewinkelt zur Schnittflächenachse und/oder rotatorisch. Die Schnittflächenachse erstreckt sich parallel zur Bewegungsrichtung des Stempels, jedoch bezogen auf das Werkstück.

Besonders bevorzugt wird die bewegliche Sensoreinheit bis auf die Höhe der Schnittfläche bewegt, sodass senkrecht zur Schnittflächenachse bzw. senkrecht auf die Schnittfläche gemessen werden kann. Insbesondere kann die Sensoreinheit entlang der Höhe der Schnittfläche und ggf. darüber hinaus bewegt werden.

Hierzu umfasst die Sensoreinheit besonders bevorzugt eine Sensorlanze mit einer optischen Messspitze am Ende der Sensorlanze. Mit der Sensorlanze kann die Messspitze, und somit der Fokus der optischen Sensoreinheit, möglichst nahe und/oder senkrecht zur Schnittfläche bewegt werden.

Des Weiteren ist bevorzugt vorgesehen, dass die erste Bearbeitungsmaschine einen Werkzeugträger umfasst. Dieser Werkzeugträger ist zur Aufnahme des zumindest einen Stempels ausgebildet. Vorzugsweise bewegt sich der Werkzeugträger mit allen an ihm befestigten Stempeln zur Durchführung der trennenden Bewegung auf und ab. Gemäß einer bevorzugten Ausgestaltung ist vorgesehen, dass die Sensoreinheit ebenfalls am Werkzeugträger angeordnet ist und sich somit zusammen mit dem Werkzeugträger bewegt. Dadurch befindet sich die Sensoreinheit möglichst nah an den zu erfassenden Schnittflächen und kann durch die Bewegung des Werkzeugträgers vorzugsweise bis auf die Höhe der Schnittfläche bewegt werden.

Des Weiteren ist bevorzugt vorgesehen, dass der Stempel aus dem Werkstück das Stanzstück in eine hohle Matrize drückt. Die Sensoreinheit befindet sich in der Matrize und kann somit die Kontur der Schnittfläche erfassen, während sich das Stanzstück in der hohlen Matrize befindet. Insbesondere wird das Stanzstück durch den Stempel bzw. durch nachrückende Stanzstücke durch die hohle Matrize bewegt. Durch diese Bewegung wird das Stanzstück an der Sensoreinheit vorbeigeführt, während die Kontur der Schnittfläche erfasst wird.

Im Rahmen vorliegender Erfindung ist es nicht zwingend notwendig, die Schnittfläche über den gesamten Umfang zu erfassen. Bevorzugt ist jedoch, dass die Schnittfläche über einen ausreichenden Teil der Höhe der Schnittfläche (definiert parallel zur Schnittflächenachse) erfasst wird. So ist bevorzugt vorgesehen, mit der Sensoreinheit zumindest 50 %, vorzugsweise zumindest 75 %, besonders vorzugsweise 95 %, der Höhe der Schnittfläche zu erfassen. Dadurch ist es möglich, entscheidende Schnittflächenbereiche der Schnittfläche zu erfassen und der Auswertung zuzuführen.

Die Schnittfläche setzt sich, entlang ihrer Höhe bzw. entlang der Schnittflächenachse, insbesondere aus einem Kanteneinzugsbereich, einem Glattschnittbereich, einem Bruchflächenbereich und einem Schnittgratbereich zusammen. Besonders bevorzugt ist vorgesehen, mit der Sensoreinheit mehrere dieser Schnittflächenbereiche, vorzugsweise zumindest zwei oder drei dieser Schnittflächenbereiche, zu erfassen.

Das Erfassen der Schnittfläche über einen wesentlichen Teil ihrer Höhe erfolgt durch einen entsprechend großen Erfassungswinkel der Sensoreinheit und/oder durch ein Bewegen der Sensoreinheit und/oder durch ein Bewegen des Werkstücks.

Im Folgenden werden vorteilhafte Ausgestaltungen der zumindest einen Sensoreinheit zum Erfassen der Kontur der Schnittfläche am Werkstück beschrieben. Da innerhalb der Bearbeitungsanlage mehrere Sensoreinheiten verwendet werden können, können auch die hier beschriebenen Verfahren zur optischen Erfassung im erfindungsgemäßen Verfahren kombiniert werden.

Bei allen Ausgestaltung der Sensoreinheit kann vorzugsweise an der Bearbeitungsanlage und/oder der ersten Bearbeitungsmaschine und/oder dem Werkstück eine Schwingung gemessen und die gemessene Schwingung bei der Auswertung der erfassten optischen Daten berücksichtigt werden.

### Chromatisch-konfokale Abstandsmessung:

Bevorzugt wird mit der Sensoreinheit eine chromatisch-konfokale Abstandsmessung zur Schnittfläche durchgeführt.

Die chromatisch-konfokale Abstandsmessung verwendet die Dispersion von weißem Licht in einer Fokussierlinse um den Abstand einer reflektierenden Oberfläche zum Sensor zu bestimmen. Sie macht sich somit die chromatische Aberration zu Nutze.

### Digitale Bilderfassung und Bildverarbeitung;

Bevorzugt erfolgt mit der Sensoreinheit eine digitale 2D Bilderfassung der Schnittfläche, wobei mittels Bildverarbeitung, vorzugsweise einem Kantendetektionsalgorithmus, die Kontur errechnet wird.

Bevorzugt erfolgt die 2D Bilderfassung mit zumindest einer Kamera und zumindest einer Beleuchtungseinheit.

Bevorzugt sind die Beleuchtungseinheit und die zugehörige Kamera auf unterschiedlichen Seiten der Schnittfläche, bezogen auf eine zur Schnittflächenachse senkrechte Ebene, angeordnet.

Alternativ können die Beleuchtungseinheit und die Kamera auch auf derselben Seite angeordnet werden. Insbesondere ist dabei die Beleuchtungseinheit in das Objektiv der Kamera eingebaut.

Bevorzugt ist die Kamera mit einem Winkel α zu einer Ebene, die senkrecht zur Schnittflächenachse steht, ausgerichtet, wobei der Winkel α höchstens 60°, vorzugsweise höchstens 50°, besonders vorzugsweise höchstens 40°, beträgt.

Bevorzugt ist die Kamera auf der Seite des Schnittgrates der Schnittfläche angeordnet.

### Streifenprojektionsverfahren:

Bevorzugt wird mit der Sensoreinheit die Kontur nach dem Streifenprojektionsverfahren erfasst.

Das Streifenprojektionsverfahren wird auch als Streifenlichtoptometrie oder Streifenlichtscanning bezeichnet. Der Streifenprojektionssensor umfasst einen Musterprojektor und zumindest eine Kamera. Der Musterprojektor beleuchtet das Messobjekt zeitlich sequentiell mit Mustern von parallelen hellen und dunklen Streifen unterschiedlicher Breite. Die Kamera(s) registrieren das projizierte Streifenmuster unter einem bekannten Blickwinkel zur Projektion. Für jedes Projektionsmuster wird mit der/den Kamera(s) ein Bild aufgenommen. Für jeden Bildpunkt aller Kameras entsteht so eine zeitliche Folge von unterschiedlichen Helligkeitswerten.

### Lichtschnittverfahren:

Bevorzugt wird mit der Sensoreinheit die Kontur nach dem Lichtschnittverfahren erfasst.

Bevorzugt umfasst die Sensoreinheit mehrere, vorzugsweise zumindest zwei oder drei, Lichtschnitteinheiten, jeweils mit einer Lichtquelle und einem Lichtdetektor, die, vorzugsweise überlappende, Bereiche der Schnittfläche erfassen.

Bevorzugt sind die Lichtschnitteinheiten auf unterschiedlichen Seiten der Schnittfläche, bezogen auf eine zur Schnittflächenachse senkrechte Ebene, angeordnet.

Ein Lichtschnittsensor umfasst eine Lichtschnitt-Lichtquelle und zumindest eine Kamera. Das Lichtschnittverfahren ist ein Verfahren der optischen 3D Messtechnik, das die Vermessung eines Höhenprofils entlang einer projizierten Lichtlinie ermöglicht. Es basiert auf dem Prinzip der Triangulation. Die Lichtschnitt-Lichtquelle (meist mit einem Laser als Lichtquelle) projiziert eine möglichst schmale und helle Linie auf das Messobjekt. Die zumindest eine Kamera beobachtet die Projektion der Linie auf dem Objekt. Die Verschiebung der Linie im Kamerabild wird mit den Methoden der Triangulation in 3D Koordinaten umgerechnet.

### Kombinierte digitale Bilderfassung mit Lichtschnitt-Quelle:

Vorzugsweise umfasst die Sensoreinheit eine Kamera und eine Lichtschnitt-Lichtquelle, wobei die Kamera zur digitalen 2D Bilderfassung zur anschließenden Bildverarbeitung und als Lichtschnitt-Lichtdetektor mit anschließender Auswertung nach dem Lichtschnittverfahren genutzt wird. Vorzugsweise wird für die 2D Bilderfassung eine Beleuchtung eingestzt.

Vorzugsweise liegen die drei optischen Achsen von Kamera, Beleuchtung und Lichtschnitt-Lichtquelle in zumindest zwei unterschiedlichen, nicht-parallelen Ebenen.

### Bearbeitungsanlage zum Erfassen der Schnittfläche:

Die Erfindung umfasst ferner eine Bearbeitungsanlage. Diese ist insbesondere zur Durchführung des beschriebenen Verfahrens ausgebildet. Die Bearbeitungsanlage umfasst die beschriebene erste Bearbeitungsmaschine mit dem zumindest einen beweglichen Stempel zum Trennen, vorzugsweise Stanzen oder Stanz-Räumen, des Werkstücks. Des Weiteren umfasst die Bearbeitungsanlage zumindest eine der Sensoreinheiten, ausgebildet zum berührungslosen, insbesondere optischen, Erfassen einer Kontur der Schnittfläche. Die Sensoreinheit ist dabei angeordnet, um die Kontur der Schnittfläche inline in der Bearbeitungsanlage zu erfassen.

Insbesondere die Ausgestaltung der Bearbeitungsmaschine sowie die Definition der Bearbeitungsanlage wurden anhand des Verfahrens bereits ausführlich beschrieben. Die im Rahmen des erfindungsgemäßen Verfahrens beschriebenen vorteilhaften Ausgestaltungen und Unteransprüche finden entsprechend vorteilhafte Anwendung auf die erfindungsgemäße Bearbeitungsanlage.

Insbesondere ist vorgesehen, dass die Bearbeitungsanlage so ausgebildet ist, dass das Werkstück beim Erfassen durch die Sensoreinheit mit einer Transportanordnung in der Bearbeitungsanlage bewegbar ist.

Ferner ist bevorzugt vorgesehen, dass die Bearbeitungsanlage eine dem Stempel gegenüberliegende hohle Matrize umfasst, wobei die Sensoreinheit in der hohlen Matrize angeordnet ist.

Ferner ist bevorzugt vorgesehen, dass die Sensoreinheit an der Bearbeitungsanlage zum Erfassen der Schnittfläche beweglich angeordnet ist. Insbesondere ist die Sensoreinheit hierzu mit zumindest einem Aktuator verbunden, der die Sensoreinheit bewegt.

Die erste Bearbeitungsmaschine der Bearbeitungsanlage umfasst vorzugsweise einen Werkzeugträger zur Aufnahme des zumindest einen Stempels. Die Sensoreinheit ist vorzugsweise am Werkzeugträger befestigt.

### Verfahren und Bearbeitungsmaschine zum Erfassen einer Aktivfläche eines Stempels:

Ferner gezeigt ist ein Verfahren zum Betrieb der Bearbeitungsmaschine, wobei inline, also während der Produktion mit der Bearbeitungsmaschine, die Aktivfläche des Stempels erfasst wird.

Die Bearbeitungsmaschine umfasst, wie bereits beschrieben, einen beweglichen Stempel. Bei dem "Verfahren bzw. der Bearbeitungsmaschine zum Erfassen der Aktivfläche eines Stempels" kann der Stempel zum Trennen und/oder Umformen eines Werkstücks verwendet werden. So handelt es sich vorzugsweise um einen Stanzstempel, Stanz-Räumstempel, Biegestempel oder Prägestempel. Die "Aktivfläche" kontaktiert bei der Bearbeitung das Werkstück. So ist die "Aktivfläche" beispielsweise eine Schneidkante am Stanzstempel oder Stanz-Räumstempel oder eine Umformkante, ggf. mit entsprechendem Radius, am Biegestempel oder Prägestempel.

An der Bearbeitungsmaschine ist zumindest eine Sensoreinheit installiert. Mit der Sensoreinheit kann ohne Entnahme des Stempels aus der Bearbeitungsmaschine die Aktivfläche, insbesondere eine Kontur der Aktivfläche, des Stempels erfasst werden.

Das Auswerten der Beschaffenheit der Aktivfläche erfolgt basierend auf den durch die Sensoreinheit erfassten Daten. Genauso wie basierend auf der Beschaffenheit der Schneidfläche können auch basierend auf der Beschaffenheit der Aktivfläche die oben beschriebenen Rückschlüsse gezogen werden. So ist es möglich, die Qualität der produzierten Teile zu beurteilen, den Verschleiß der Aktivfläche zu beurteilen und gegebenenfalls die Bearbeitungsmaschine entsprechend anzusteuern.

Im Anschluss an das Erfassen der Kontur der Aktivfläche erfolgt ein Auswerten der Beschaffenheit der Aktivfläche basierend auf den durch die Sensoreinheit erfassten Daten. Basierend auf der ausgewerteten Beschaffenheit der Aktivfläche können unterschiedliche Rückschlüsse gezogen werden: beispielsweise ist es möglich, basierend auf der Aktivfläche die Qualität der produzierten Teile zu beurteilen, was beispielsweise zu einer Ausmusterung einzelner Teile führt. Des Weiteren ist vorgesehen, basierend auf der Aktivfläche auf die Qualität der Aktivfläche des Stempels zu schließen. Dadurch kann ein Verschleiß der Aktivfläche ermittelt werden. Ferner kann basierend auf der Beschaffenheit der Aktivfläche die Bearbeitungsmaschine anderweitig angesteuert werden: beispielsweise kann der Takt der Bearbeitungsmaschine verändert werden. Die erfindungsgemäße Inline-Messung ermöglicht es, während der Produktion mit der Bearbeitungsmaschine die Beschaffenheit der Aktivfläche zu ermitteln, die beschriebenen Rückschlüsse zu ziehen und entsprechende Maßnahmen inline zu ergreifen.

Besonders bevorzugt ist vorgesehen, die mit der zumindest einen Sensoreinheit erfassten Daten in einer Recheneinheit auszuwerten. Besonders bevorzugt erfolgt eine Ansteuerung der Bearbeitungsmaschine durch die Recheneinheit und basierend auf der ausgewerteten Beschaffenheit der Aktivfläche.

Vorzugsweise ist vorgesehen, dass die Sensoreinheit die Kontur der Aktivfläche im Takt mit der die Trennung bzw. das Umformen ausführenden Bewegung des Stempels erfasst. So erfolgt das Erfassen durch die Sensoreinheit während der Stempel im Takt bewegt wird und/oder zwischen zwei getakteten Bewegungen. Der Stempel der Bearbeitungsmaschine wird beispielsweise in einem Takt von 50 pro Minute oder schneller bewegt. Besonders bevorzugt erfasst die Sensoreinheit die Kontur zumindest bei jedem 100-ten Takt, vorzugsweise zumindest bei jedem 50-ten Takt, besonders vorzugsweise zumindest bei jedem 10-ten Takt, weiter vorzugsweise zumindest bei jedem Takt.

Zusätzlich kann die Bearbeitungsmaschine zumindest eine Sensoreinheit zum Erfassen der Schnittfläche am Werkstück umfassen, wie dies bereits ausführlich beschrieben wurde.

Für das Erfassen der Aktivfläche des Stempels können die bereits beschriebenen optischen Methoden zur berührungslosen Erfassung verwendet werden.

Besonders bevorzugt ist vorgesehen, die Sensoreinheit zum Erfassen der Aktivfläche in den Werkzeugträger einzubauen. Innerhalb des Werkzeugträgers erfolgt vorzugsweise eine Relativbewegung zwischen der zu erfassenden Aktivfläche und der Sensoreinheit, sodass die Aktivfläche über einen wesentlichen Teil ihrer Höhe erfasst werden kann.

Des Weiteren ist eine Bearbeitungsmaschine, die insbesondere dazu ausgebildet ist, das Verfahren zum Erfassen der Aktivfläche auszuführen offenbart. Hierzu umfasst die Bearbeitungsmaschine zumindest einen beweglichen Stempel zum Trennen und/oder Umformen des Werkstücks und zumindest eine Sensoreinheit an der Bearbeitungsmaschine. Die Sensoreinheit ist dazu ausgebildet, die Aktivfläche des Stempels berührungslos zu erfassen. Ferner ist die Sensoreinheit so angeordnet, dass das Erfassen während des Produzierens mit der Bearbeitungsmaschine erfolgen kann.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Ansicht eine erfindungsgemäßen Bearbeitungsanlage zur Durchführung des erfindungsgemäßen Verfahrens zum Erfassen der Schnittfläche,
- Fig. 2: eine Schnittfläche,
- Fig. 3: einen Stanzstreifen und eine Sensoreinheit gemäß dem erfindungsgemäßen Verfahren,
- Fig. 4: eine schematische Auswertung der Beschaffenheit der Schnittfläche gemäß dem erfindungsgemäßen Verfahren,
- Fig. 5: eine schematische Darstellung zur optischen Erfassung gemäß dem erfindungsgemäßen Verfahren,
- Fig. 6: eine weitere schematische Darstellung zur optischen Erfassung gemäß dem erfindungsgemäßen Verfahren,
- Fig. 7: eine schematische Auswertung zur optischen Erfassung nach Fig. 6,
- Fig. 8: eine weitere schematische Darstellung zur optischen Erfassung gemäß dem erfindungsgemäßen Verfahren, und
- Fig. 9: eine schematische Detaildarstellung einer Bearbeitungsmaschine zu Durchführung des Verfahrens zum Erfassen der Aktivfläche.

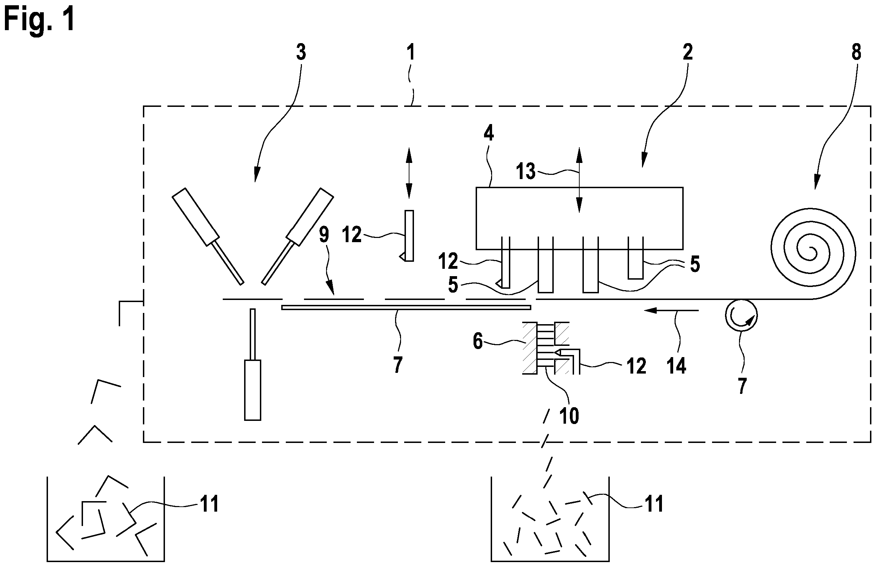

Figur 1 zeigt in schematischer Ansicht eine erfindungsgemäße Bearbeitungsanlage 1 zu Durchführung des erfindungsgemäßen Verfahrens.

Die Bearbeitungsanlage 1 umfasst eine erste Bearbeitungsmaschine 2 und eine weitere Bearbeitungsmaschine 3. Die erste Bearbeitungsmaschine 2 ist als Stanzmaschine ausgebildet. Die weitere Bearbeitungsmaschine 3 ist als Biegemaschine ausgebildet.

Die Bearbeitungsmaschine 2 umfasst einen beweglichen Werkzeugträger 4 mit mehreren Stempeln 5 zum Stanzen eines Werkstücks 8 aus Blech. Der Werkzeugträger 4 bewegt sich dabei mit den Stempeln 5 entlang der eingezeichneten Bewegungsrichtung 13. Gegenüber eines Stempels 5 ist rein schematisch eine Matrize 6 dargestellt. Tatsächlich kann die Bearbeitungsmaschine 2 mehrere Matrizen aufweisen.

Die erste Bearbeitungsanlage 1 umfasst eine Transportanordnung 7. Mittels der Transportanordnung 7 wird das Werkstück 8 durch die erste Bearbeitungsmaschine 2 transportiert. In der ersten Bearbeitungsmaschine 2 wird das Werkstück 8 in Stanzstreifen 9 und Stanzstücke 10 unterteilt. Durch den Stempel 5 werden die Stanzstücke 10 in die hohle Matrize 6 gedrückt. Die nachrückenden Stanzstücke 10 schieben die Stanzstücke 10 durch die Matrize 6, sodass die Stanzstücke 10 auf der Unterseite der Matrize 6 herausfallen. So erfolgt die Bewegung der Stanzstücke 10 durch die hohle Matrize 6 im Takt der stanzenden ersten Bearbeitungsmaschine 2.

Die Stanzstreifen 9 werden mittels der Transportanordnung 7 einzeln (oder als zusammenhängender Stanzstreifen) und im Takt zur weiteren Bearbeitungsmaschine 3 transportiert. Der Transport mit der Transportanordnung 7 erfolgt dabei in der eingezeichneten Förderrichtung 14. In der weiteren Bearbeitungsmaschine 3 werden die Stanzstreifen 9 gebogen und verlassen daraufhin die Bearbeitungsanlage 1.

Figur 1 zeigt die Systemgrenze der Bearbeitungsanlage 1 . Innerhalb der Bearbeitungsanlage 1 werden die Stanzstreifen 9 und Stanzstücke 10 im Takt der Stanzmaschine und geordnet bewegt. Erst bei Verlassen der Bearbeitungsanlage 1 werden die Stanzstreifen 9 und Stanzstücke 10 als Schüttgut 1 1 bevorratet.

Figur 1 zeigt drei unterschiedliche Positionen zur Anordnung einer Sensoreinheit 12. In der Bearbeitungsanlage 1 kann an einer der Positionen oder mehreren der Positionen jeweils zumindest eine Sensoreinheit 12 zur Anwendung kommen.

Durch das Stanzen entstehen am Stanzstreifen 9 und am Stanzstück 10 jeweils eine Schnittfläche. Die Sensoreinheit 12 ist dazu ausgebildet, die Schnittfläche berührungslos, insbesondere optisch, zu erfassen. Das Erfassen der Schnittflächen erfolgt dabei inline in der produzierenden Bearbeitungsanlage 1.

Figur 1 zeigt zwischen der ersten Bearbeitungsmaschine 2 und der weiteren Bearbeitungsmaschine 3 eine Sensoreinheit 12 zum Erfassen der Kontur der Schnittfläche am Stanzstreifen 9. Je nach Ausgestaltung der Sensoreinheit 12 ist dabei vorgesehen, die Sensoreinheit 12 an dieser Stelle fest oder beweglich anzuordnen.

Figur 1 zeigt eine Sensoreinheit 12 am Werkzeugträger 4. Diese Sensoreinheit 12 wird insbesondere zusammen mit dem Werkzeugträger 4 entlang der Bewegungsrichtung 13 bewegt. Dadurch ist es insbesondere möglich, dass sie Sensoreinheit 12 bis auf Höhe des Stanzstreifs 9 bewegt wird und somit rechtwinklig zur Schnittflächenachse 12 bzw. rechtwinklig auf die Schnittfläche messen kann. Allerdings ist es auch möglich, die Sensoreinheit 12 am Werkzeugträger 4 so auszugestalten, dass die Sensoreinheit 12 nicht bis zum Stanzstreifen 9 bewegt werden muss, sondern nur möglichst nahe an die zu messende Schnittfläche bewegt wird.

Figur 1 zeigt in der Matrize 6 eine Sensoreinheit 12 zum Erfassen der Kontur der Schnittfläche an den Stanzstücken 10. Bei dieser Messung kann insbesondere ausgenutzt werden, dass sich die Stanzstücke 10 durch die hohle Matrize 6 bewegen. Dadurch kann mit der Sensoreinheit 12 die Schnittfläche entlang der vollständigen Höhe des Stanzstücks 10 erfasst werden.

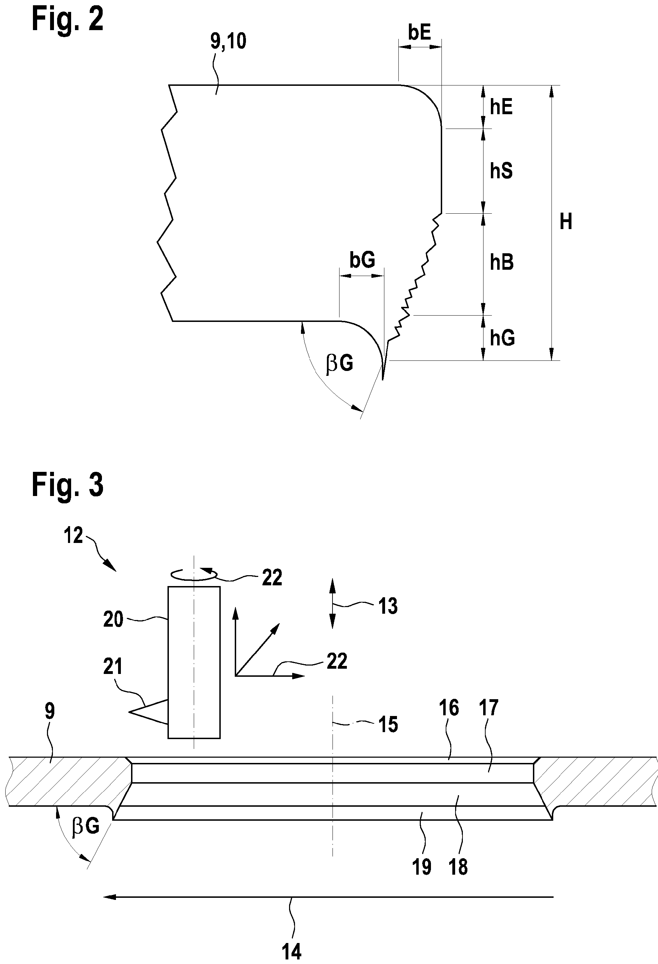

Figur 2 zeigt in schematischer Ansicht eine mit der Sensoreinheit 12 erfasste Schnittfläche. Charakteristisch für die Schnittfläche bzw. die Kontur der Schnittfläche sind insbesondere folgende Größen: Schnittflächenhöhe H, Kanteneinzugshöhe hE, Kanteneinzugsbreite bE, Glattschnitthöhe hS, Bruchflächenhöhe hB, Schnittgrathöhe hG, Schnittgratbreite bG, Bruchflächenwinkel βG. Ergänzend hierzu zeigt die Darstellung in Figur 3 die Aufteilung der Schnittfläche in einen Kanteneinzugsbereich 16, einen Glattschnittbereich 17, einen Bruchflächenbereich 18 und einen Schnittgratbereich 19. Bei dem Stanzstreifen 9 ist die Schnittflächenachse 15 eingezeichnet, die basierend auf der Bewegungsrichtung 13 des Stempels 5 definiert ist. Die vier Bereiche erstrecken sich über die Höhe H der Schnittfläche.

Ferner zeigt Figur 3 eine Sensoreinheit 12 mit einer Sensorlanze 20 und einer optischen Messspitze 21. Die optische Messspitze 21 zeigt rein schematisch den Strahlengang und den Fokus der Sensoreinheit 12. Wenn die Sensoreinheit 12 beweglich angeordnet ist, kann sie beispielsweise entlang der eingezeichneten Freiheitsgrade 22 bewegt werden. Dadurch ist es möglich, die Messspitze 21 bis auf die Höhe des Stanzstreifens 9 zu bewegen. Durch diese Bewegung kann die gesamte Höhe H der Schnittfläche vermessen werden. Ferner ist es möglich, die Sensoreinheit 12 zu rotieren, um die Schnittfläche nicht nur an einer Linie zu erfassen. Wie bereits beschrieben, ist es jedoch auch möglich, eine fest installierte Sensoreinheit 12 zu verwenden.

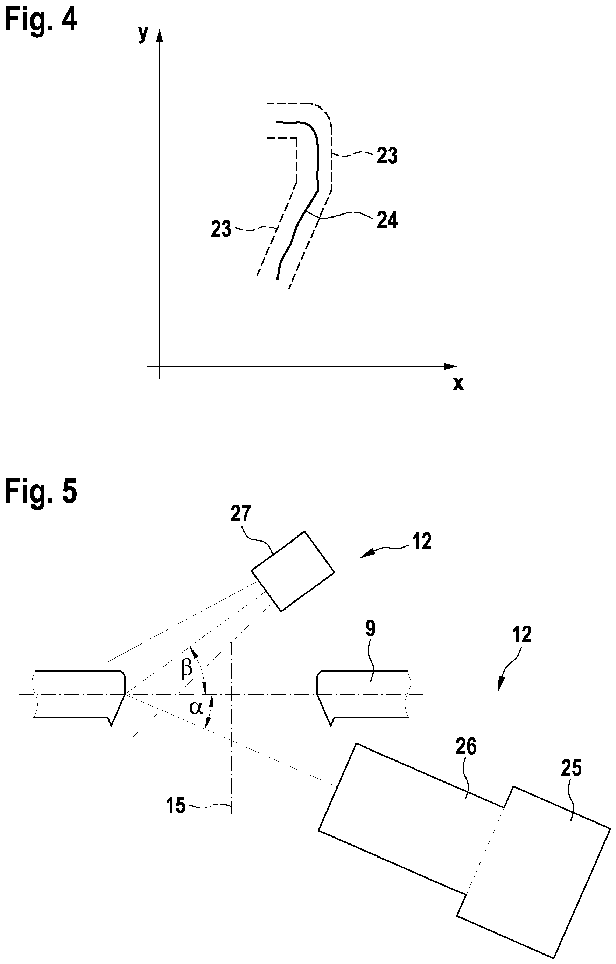

Figur 4 zeigt beispielhaft, wie die Auswertung der erfassten Daten der Sensoreinheit 12 erfolgen kann. So kann die erfasste Kontur 24 der Schnittfläche beispielsweise mit einer Hüllkurve 23 verglichen werden. Die Rückschlüsse, beispielsweise auf den Verschleiß des Stempels, können bei entsprechender Abweichung der erfassten Kontur 24 von der Hüllkurve 23 gezogen werden. Allerdings kann die Auswertung auch auf beliebige andere Weise erfolgen, insbesondere durch den Vergleich der erfassten Kontur 24 mit Vergleichswerten, die in einer Recheneinheit hinterlegt sind.

Figuren 5 bis 8 zeigen schematische Aufbauten der Sensoreinheit 12. Diese Sensoreinheiten 12 können vorzugsweise fest installiert werden und müssen zum Erfassen der Schnittflächen nicht bewegt werden.

Figur 5 zeigt eine Sensoreinheit 12 umfassend eine Kamera 25 mit Objektiv 26 und eine Beleuchtung 27. Die Kamera 25 und die Beleuchtung 27 befinden sich auf zwei unterschiedlichen Seiten des Werkstücks 8. Bezüglich einer zur Schnittflächenachse 15 senkrechte Ebene sind die Kamera 25 mit einem Kamerawinkel α und die Beleuchtung 27 mit einem Beleuchtungswinkel β ausgerichtet.

Die Kamera 25 und die Beleuchtung 27 sind statisch angeordnet und müssen zur Messung nicht in die Stanzöffnung bewegt werden. Mit diesem Messsystem wird die Schnittfläche inline erfasst und mit Hilfe der digitalen Bildverarbeitung ausgewertet. Insbesondere mit Hilfe von Kantendetektionsalgorithmen können so die Übergänge z.B. zwischen dem Kanteneinzugsbereich 16, dem Glattschnittbereich 17, dem Bruchflächenbereich 18 und dem Schnittgratbereich 19 erkannt und ausgewertet werden. Durch die Integration in den Prozess können insbesondere Veränderungen der Oberflächenmerkmale über die Zeit erkannt und Trends definiert werden. Hierdurch können Rückschlüsse auf die Qualität der Bauteile als auch auf den Verschleißzustand des Stempels 5 gezogen werden. Durch entsprechende Festlegung der Qualitätsparameter können Teile somit als Ausschuss gekennzeichnet werden und automatisch erkannt werden. Weiterhin können Gegenmaßnahmen für den Stempel 5 abgeleitet werden und diese manuell oder durch ein automatisches Regelsystem im laufenden Prozess angepasst werden.

Da mit diesem statischen Aufbau die abzubildende Schnittfläche schräg und nicht im rechten Winkel zur optischen Achse der Kamera 25 liegt, wird die sogenannte Scheimpflugbedingung verletzt. Dies hat zur Folge, dass die nutzbare Tiefenschärfe reduziert wird und man unter Umständen nicht in der Lage ist, die gesamte Schnittfläche scharf abzubilden. Dieser störende Effekt kann vorzugsweise reduziert werden in dem man (i) die Scheimpflugbedingung z.B. mit Hilfe eines speziellen Scheimpflugobjektiv wieder herstellt; und/oder (ii) die negative Wirkung der Verletzung der Scheimpflugbedienung dadurch minimiert, dass man einen möglichst flachen Kamerawinkel α für die Kamera 25 wählt; und/oder (iii) die Kamera 25 auf der Seite des Bruchflächenbereichs 18 bzw. Schnittgratbereichs 19 der Schnittfläche installiert, da diese Bereiche aufgrund der geometrischen Form bei dieser Kamerainstallation tendenziell mehr zur Kamera 25 hin zeigen.

Die Kamera 25 mit Objektiv 26 und die Beleuchtung 27 werden vorzugsweise so angeordnet, dass eine bzgl. der zu untersuchenden Merkmale kontrastreiche Abbildungen erzielt wird. Dazu kann man sich insbesondere unterschiedlicher Beleuchtungskonfigurationen wie z.B. axiale Beleuchtung oder Auflichtbeleuchtung (wie in Fig. 5 dargestellt) bedienen. Bei der Auflichtbeleuchtung kann man insbesondere den Beleuchtungswinkel β so optimieren, dass die zu detektierenden Merkmale mit maximalem Kontrast abgebildet werden.

Je nach Anwendung und Material können vorzugsweise Farbfilter und/oder Polarisationsfilter und/oder monochromatische Beleuchtung mit gezielt ausgewählter Lichtwellenlänge eingesetzt werden. Ebenfalls kann eine blitzende Beleuchtung vorteilhaft sein, insbesondere um kurze Belichtungszeiten zu realisieren.

Da sich das Werkstück 8 durch seine natürliche Vorschubbewegung innerhalb des Fertigungsprozesses an der Sensoreinheit 12 vorbei bewegt, kann man diese Bewegung auch zum Aufzeichnen eines größeren Bildbereichs ausnutzen. Dazu muss man während der Bewegung eine ganze Bildserie aufnehmen und daraus mit Hilfe der Bildverarbeitung ein effektiv größeres Bild mit einer entsprechend größeren Abdeckung der gesamten Schnittfläche berechnen. Hieraus können dann wiederum die Qualitäts- und Geometriemerkmale erkannt werden.

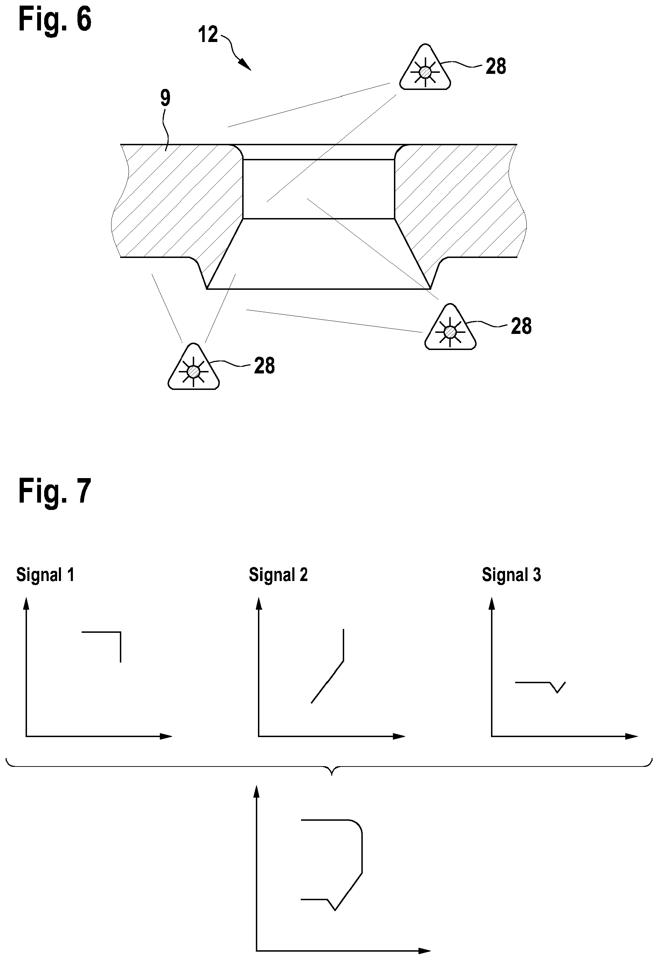

Figur 6 zeigt Sensoreinheiten 12 als Lichtschnittsensoren 28. Der Aufbau besteht aus einem oder mehreren optischen Lichtschnittsensoren 28 nach dem Prinzip der Lasertriangulation.

Vorzugsweise sind die Lichtschnittsensoren 28 statisch angeordnet und bewegen sich somit nicht beim Erfassen der Schnittfläche. Mit den Lichtschnittsensoren 28 wird, ähnlich wie bei der beweglichen Sensoreinheit 12, eine Messung entlang einer vertikalen Linie über die Schnittfläche durchgeführt. Da man mit diesem statischen Aufbau nicht in der Lage ist, den Sensor direkt senkrecht über der Schnittfläche zu positionieren, kann es nötig sein, dass man mehrere Lichtschnittsensoren (siehe Figur 6) so anordnet, dass man durch Zusammensetzung aller Messsignale wieder einen möglichst großen Teil der Kontur erhält. Hierzu werden die Lichtschnittsensoren 28 in verschiedenen Winkeln angestellt und ihre räumliche Anordnung kann ebenfalls unter und über dem Werkstück 8 liegen. Es werden von den Lichtschnittsensoren 28 entsprechende Abtastgeometrien auf die Prüfteiloberfläche projiziert und deren Reflexionen aufgenommen, die Kontur berechnet und zu einem Gesamtprofil überlagert, wie dies Figur 7 zeigt.

Wie bereits beschrieben, kann man auch mit diesem Verfahren wieder die Bewegung des Werkstücks 8 ausnutzen und so eine 3D-Kontur der Schnittfläche berechnen. Vorgesehen ist auch, dass man die Lasertriangulartionssensoren (Lichtschnittsensoren 28) durch Streifenprojektionssensoren ersetzt.

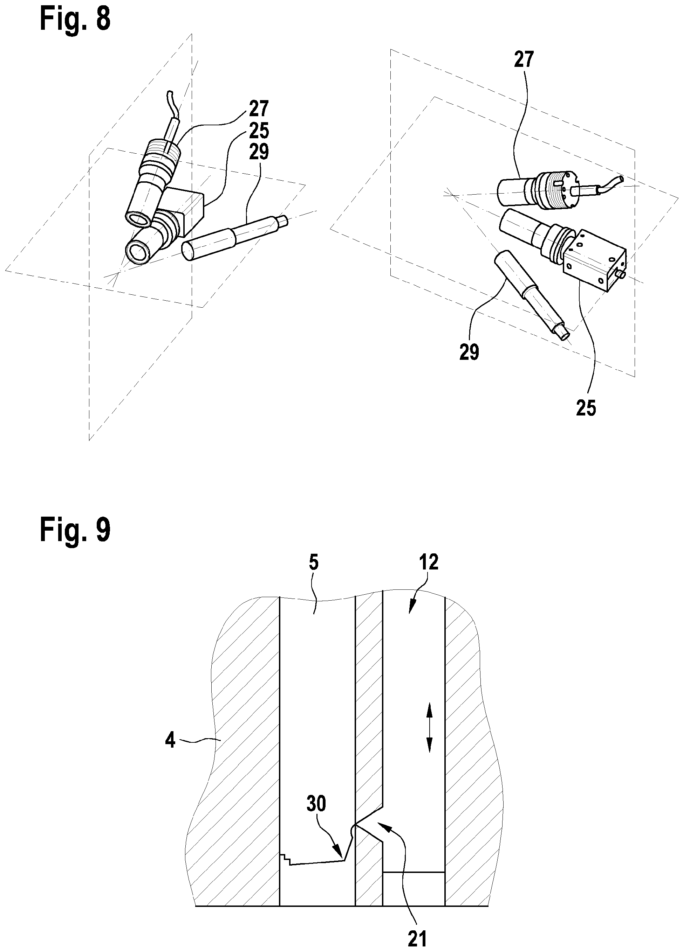

Figur 8 zeigt eine Sensoreinheit 12 aus einem oder mehreren Lichtschnitt-Lichtquellen 29 die eine dünne gerade Laserlichtlinie auf die Schnittfläche projizieren, einer Kamera 25 mit Objektiv 26 und einer Beleuchtungseinheit 27. Dieser Messaufbau ist vorzugsweise statisch angeordnet und muss zur Messung nicht in die Stanzöffnung bewegt werden. Diese Anordnung wird zur kombinierten digitalen Bilderfassung mit Lichtschnitt-Quelle genutzt. Die Kamera 25 wird dabei für die 2D Bilderfassung als auch für die Lichtschnittmessung eingesetzt.

Vorzugsweise werden die Beleuchtungseinheit und die Laserlinien nacheinander ein- und wieder ausgeschaltet und jeweils mit der Kamera 25 ein Bild aufgenommen. Aus der Bildaufnahme mit der Laserlinienbeleuchtung kann dann analog zum Lichtschnittverfahren über den Triangulationsalgorithmus ein Profil der Schnittfläche berechnet werden. Ebenfalls können die Oberflächen bewegt werden und die Bildaufnahme unter hoher Frequenz erfolgen. So kann die Topografie der Oberfläche aufgezeichnet werden.

Es kann notwendig sein, die Beleuchtung auszuschalten und die Bildaufnahme ohne Lasereinheit von der Bildaufnahme mit Lasereinheit zeitlich zu trennen. Vorzugsweise kann dies jedoch auch gleichzeitig erfolgen.

Figur 9 zeigt einen Ausschnitt der ersten Bearbeitungsmaschine 2 mit einer Anordnung zum Erfassen einer Aktivfläche 30 am Stempel 5, insbesondere einer Schneidkante am Stanzstempel. Dazu wird die Relativbewegung zwischen dem Stempel 5 und einer Führungsplatte des Werkzeugträgers 4 genutzt um die verschlissene Aktivfläche 30 des Stempels 5 zu messen. Ein optionaler separater Antrieb der Sensoreinheit 12 kann mittels diverser Antriebe erfolgen.

### Bezugszeichenliste

- 1: Bearbeitungsanlage
- 2: erste Bearbeitungsmaschine
- 3: weitere Bearbeitungsmaschine
- 4: Werkzeugträger
- 5: Stempel
- 6: Matrize
- 7: Transportanordnung
- 8: Werkstück
- 9: Stanzstreifen
- 10: Stanzstück
- 11: Schüttgut
- 12: Sensoreinheit
- 13: Bewegungsrichtung
- 14: Förderrichtung
- 15: Schnittflächenachse
- 16: Kanteneinzugsbereich
- 17: Glattschnittbereich
- 18: Bruchflächenbereich
- 19: Schnittgratbereich
- 20: Sensorlanze
- 21: Messspitze
- 22: Freiheitsgrade
- 23: Hüllkurve
- 24: Kontur
- 25: Kamera
- 26: Objektiv
- 27: Beleuchtung
- α: Kamerawinkel
- β: Beleuchtungswinkel
- 28: Lichtschnittsensor
- 29: Lichtschnitt-Lichtquelle
- 30: Schneidkante
- H: Schnittflächenhöhe
- hE: Kanteneinzugshöhe
- bE: Kanteneinzugsbreite
- hS: Glattschnitthöhe
- hB: Bruchflächenhöhe
- hG: Schnittgrathöhe
- bG: Schnittgratbreite
- βG: Bruchflächenwinkel

## Patentansprüche

1. Verfahren zum Betrieb einer Bearbeitungsanlage (1) mit einer ersten Bearbeitungsmaschine (2), wobei die erste Bearbeitungsmaschine (2) zumindest einen beweglichen Stempel (5) zum Trennen, vorzugsweise Stanzen oder Stanz- Räumen, eines Werkstücks (8) umfasst, mit den folgenden Schritten
• berührungsloses, vorzugweise optisches, Erfassen einer Kontur einer durch den Stempel (5) erzeugten Schnittfläche am Werkstück (8) mit zumindest einer an der Bearbeitungsanlage (1) installierten Sensoreinheit (12), wobei das Erfassen inline in der Bearbeitungsanlage (1) und somit ohne Entnahme des Werkstücks (8) aus der Bearbeitungsanlage (1) erfolgt, und
• Auswerten der Beschaffenheit der Schnittfläche basierend auf den durch die Sensoreinheit (12) erfassten Daten,
• wobei der Stempel (5) das Werkstück (8) in einen Stanzstreifen (9) und ein Stanzstück (10) trennt,
• wobei das Werkstück (8) in der Bearbeitungsanlage (1) mit einer Transportanordnung (7) durch die erste Bearbeitungsmaschine (2) transportiert wird und nach der ersten Bearbeitungsmaschine (2) der Stanzstreifen (9) zu einer weiteren Bearbeitungsmaschine (3) transportiert wird, und
• wobei die Sensoreinheit (12) die Kontur der Schnittfläche erfasst, während der Stanzstreifen (9) mittels der Transportanordnung (7) bewegt wird und/oder auf der Transportanordnung (7) zwischen zwei getakteten Bewegungen ruht.

2. Verfahren nach Anspruch 1, wobei das Werkstück (8) beim Erfassen durch die Sensoreinheit (12) in der Bearbeitungsanlage (1) bewegt wird und/oder zwischen zwei getakteten Bewegungen ruht.

3. Verfahren nach einem der vorhergehenden Ansprüche, wobei die Sensoreinheit (12) zum Erfassen der Schnittfläche bewegt wird, vorzugsweise parallel zur Schnittflächenachse (A) und/oder abgewinkelt zur Schnittflächenachse (A) und/oder rotatorisch.

4. Verfahren nach einem der vorhergehenden Ansprüche, wobei die erste Bearbeitungsmaschine (2) einen Werkzeugträger (4) zur Aufnahme des zumindest einen Stempels (5) umfasst, wobei die Sensoreinheit (12) an dem Werkzeugträger (4) angeordnet ist.

5. Verfahren nach einem der vorhergehenden Ansprüche, wobei der Stempel (5) aus dem Werkstück (8) ein Stanzstück (10) in eine hohle Matrize (6) drückt, wobei die Sensoreinheit (12) die Kontur der Schnittfläche erfasst, während sich das Stanzstücke (10) in der hohlen Matrize (6) befindet.

6. Verfahren nach einem der vorhergehenden Ansprüche, wobei die Schnittfläche parallel zur Schnittflächenachse (A) eine Höhe (H) aufweist, wobei mit der Sensoreinheit (12) zumindest 50%, vorzugsweise zumindest 75%, der Höhe (H) der Schnittfläche erfasst wird und anschließend ausgewertet wird.

7. Verfahren nach einem der vorhergehenden Ansprüche, wobei mit der Sensoreinheit (12) mehrere Schnittflächenbereiche der Schnittfläche erfasst und anschließend ausgewertet werden; insbesondere der Kanteneinzugsbereich (16) und/oder der Glattschnittbereich (17) und/oder der Bruchflächenbereich (18) und/oder der Schnittgratbereich (19).

8. Verfahren nach einem der vorhergehenden Ansprüche, wobei die erfassten Daten der zumindest einen Sensoreinheit (12) in einer Recheneinheit ausgewertet werden und die Bearbeitungsanlage (1), vorzugsweise die erste Bearbeitungsmaschine (2), durch die Recheneinheit basierend auf der Beschaffenheit der Schnittfläche angesteuert wird.

9. Bearbeitungsanlage (1) zur Durchführung eines Verfahrens nach einem der vorhergehenden Ansprüche, umfassend
• eine erste Bearbeitungsmaschine (2) mit zumindest einem beweglichen Stempel (5) zum Trennen, vorzugsweise Stanzen oder Stanz-Räumen, eines Werkstücks (8),
• eine weitere Bearbeitungsmaschine (3), und
• zumindest eine Sensoreinheit (12) an der Bearbeitungsanlage (1), zwischen der ersten Bearbeitungsmaschine (2) und der weiteren Bearbeitungsmaschine (3) ausgebildet zum berührungslosen, vorzugweise optischen, Erfassen einer Kontur einer durch den Stempel (5) erzeugten Schnittfläche am Werkstück (8) und angeordnet zum Erfassen inline in der Bearbeitungsanlage (1).

10. Bearbeitungsanlage nach Anspruch 9, wobei das Werkstück (8) beim Erfassen durch die Sensoreinheit (12) mit einer Transportanordnung (7) in der Bearbeitungsanlage (1) bewegbar ist.

11. Bearbeitungsanlagen nach Anspruch 9 oder 10, umfassend eine dem Stempel (5) gegenüberliegende hohle Matrize (6), wobei die Sensoreinheit (12) in der hohlen Matrize (6) angeordnet ist.

12. Bearbeitungsanlage nach einem der Ansprüche 9 bis 11, wobei die Sensoreinheit (12) zum Erfassen der Schnittfläche bewegbar angeordnet ist.

13. Bearbeitungsanlage nach einem der Ansprüche 9 bis 12, wobei die erste Bearbeitungsmaschine (2) einen Werkzeugträger (4) zur Aufnahme des zumindest einen Stempels (5) umfasst, wobei die Sensoreinheit (12) an dem Werkzeugträger (4) angeordnet ist.

## Claims

1. A method of operating a processing equipment (1) with a first processing machine (2), wherein the first processing machine (2) comprises at least one movable punch (5) for cutting, preferably punching or punch-broaching, a workpiece (8), with the following steps
- contactless, preferably optical, detecting a contour of a cutting surface produced by the punch (5) on the workpiece (8) with at least one sensor unit (12) installed at the processing equipment (1), wherein the detecting takes place inline in the processing equipment (1) and thus without removing the workpiece (8) from the processing equipment (1), and
- evaluating the condition of the cutting surface based on the data detected by the sensor unit (12),
- wherein the punch (5) separates the workpiece (8) into a punched strip (9) and a punched piece (10)
- wherein the workpiece (8) is transported in the processing equipment (1) with a transport arrangement (7) through the first processing machine (2), and after the first processing machine (2) the punching strip (9) is transported to a further processing machine (3), and
- wherein the sensor unit (12) detects the contour of the cutting surface, while the punched strip (9) is moved by means of the transport arrangement (7) and/or rests on the transport arrangement (7) between two clocked movements.

2. The method according to claim 1, wherein the workpiece (8) is moved in the processing equipment (1) during detecting by the sensor unit (12) and/or rests between two clocked movements.

3. The method according to one of the preceding claims, wherein the sensor unit (12) is moved for detecting the cutting surface, preferably parallel to the cutting surface axis (A) and/or angled to the cutting surface axis (A) and/or rotationally.

4. The method according to one of the preceding claims, wherein the first processing machine (2) comprises a tool carrier (4) for receiving the at least one punch (5), wherein the sensor unit (12) is disposed at the tool carrier (4).

5. The method according to one of the preceding claims, wherein the punch (5) presses a punch piece (10) from the workpiece (8) into a hollow template (6), wherein the sensor unit (12) detects the contour of the cutting surface, while the punch piece (10) is located in the hollow template (6).

6. The method according to one of the preceding claims, wherein the cutting surface comprises a height (H) parallel to the cutting surface axis (A), wherein at least 50%, preferably at least 75%, of the height (H) of the cutting surface is detected with the sensor unit (12) and subsequently evaluated.

7. The method according to one of the preceding claims, wherein a plurality of cutting surface portions of the cutting surface is detected with the sensor unit (12) and subsequently evaluated; in particular the edge indenting portion (16) and/or the smooth cutting portion (17) and/or the break surface portion (18) and/or the cutting burr portion (19).

8. The method according to one of the preceding claims, wherein the detected data of the at least one sensor unit (12) are evaluated in a computing unit and the processing equipment (1), preferably the first processing machine (2), is controlled by the computing unit based on the condition of the cutting surface.

9. A processing equipment (1) for carrying out a method according to one of the preceding claims, comprising
- a first processing machine (2) with at least one movable punch (5) for cutting, preferably punching or punch-broaching, a workpiece (8),
- a further processing machine (3), and
- at least one sensor unit (12) at the processing equipment (1), arranged between the first processing machine (2) and the further processing machine (3) for contactless, preferably optical, detecting a contour of a cutting surface produced by the punch (5) on the workpiece (8) and disposed for detecting inline in the processing equipment (1).

10. The processing equipment according to claim 9, wherein the workpiece (8) is movable with a transport arrangement (7) in the processing equipment (1) during detecting by the sensor unit (12).

11. The processing equipment according to claim 9 or 10, comprising a hollow template (6) opposite the punch (5), wherein the sensor unit (12) is disposed in the hollow template (6).

12. The processing equipment according to one of claims 9 to 11, wherein the sensor unit (12) is disposed movably for detecting the cutting surface.

13. The processing equipment according to one of claims 9 to 12, wherein the first processing machine (2) comprises a tool carrier (4) for receiving the at least one punch (5), wherein the sensor unit (12) is disposed at the tool carrier (4).

## Revendications

1. Procédé pour faire fonctionner une installation d'usinage (1) avec une première machine d'usinage (2), dans lequel la première machine d'usinage (2) comprend au moins un piston mobile (5) pour séparer, de préférence estamper ou estamper-évacuer, une pièce (8), avec les étapes suivantes
- de détection sans contact, de préférence optique, d'un contour d'une surface de coupe générée par le piston (5) sur la pièce (8) avec au moins une unité de capteur (12) installée sur l'installation d'usinage (1), dans lequel la détection est effectuée en ligne dans l'installation d'usinage (1) et donc sans prélèvement de la pièce (8) hors de l'installation d'usinage (1), et
- d'évaluation de la nature de la surface de coupe sur la base des données détectées par l'unité de capteur (12),
- dans lequel le piston (5) sépare la pièce (8) en une bande estampée (9) et en une pièce estampée (10),
- dans lequel la pièce (8) est transportée par la première machine d'usinage (2) avec un ensemble de transport (7) dans l'installation d'usinage (1) et la bande estampée (9) est transportée vers une autre machine d'usinage (3) après la première machine d'usinage (2), et
- dans lequel l'unité de capteur (12) détecte le contour de la surface de découpe, tandis que la bande estampée (9) est déplacée au moyen de l'ensemble de transport (7) et/ou est à l'arrêt sur l'ensemble de transport (7) entre deux déplacements cadencés.

2. Procédé selon la revendication 1, dans lequel la pièce (8) est déplacée dans l'installation d'usinage (1) lors de la détection par l'unité de capteur (12) et/ou est à l'arrêt entre deux déplacements cadencés.

3. Procédé selon l'une quelconque des revendications précédentes, dans lequel l'unité de capteur (12) est déplacée pour détecter la surface de coupe, de préférence de manière parallèle à l'axe de surface de coupe (A) et/ou de manière coudée par rapport à l'axe de surface de coupe (A) et/ou en rotation.

4. Procédé selon l'une quelconque des revendications précédentes, dans lequel la première machine d'usinage (2) comporte un porte-outil (4) destiné à recevoir l'au moins un piston (5), dans lequel l'unité de capteur (12) est disposée sur le porte-outil (4).

5. Procédé selon l'une quelconque des revendications précédentes, dans lequel le piston (5) pousse hors de la pièce (8) une pièce estampée (10) dans une matrice creuse (6), dans lequel l'unité de capteur (12) détecte le contour de la surface de coupe tandis que la pièce estampée (10) se trouve dans la matrice creuse (6).

6. Procédé selon l'une quelconque des revendications précédentes, dans lequel la surface de coupe présente de manière parallèle à l'axe de surface de coupe (A) une hauteur (H), dans lequel au moins 50 %, de préférence au moins 75 %, de la hauteur (H) de la surface de coupe est détecté puis est évaluée avec l'unité de capteur (12).

7. Procédé selon l'une quelconque des revendications précédentes, dans lequel plusieurs zones de surface de coupe de la surface de coupe sont détectées puis sont évaluées avec l'unité de capteur (12) ; en particulier la zone d'introduction de bord (16) et/ou la zone de coupe lisse (17) et/ou la zone de surface de rupture (18) et/ou la zone d'arête de coupe (19).

8. Procédé selon l'une quelconque des revendications précédentes, dans lequel les données détectées de l'au moins une unité de capteur (12) sont évaluées dans une unité de calcul et l'installation d'usinage (1), de préférence la première machine d'usinage (2), est pilotée par l'unité de calcul sur la base de la nature de la surface de coupe.

9. Installation d'usinage (1) pour mettre en oeuvre un procédé selon l'une quelconque des revendications précédentes, comprenant
- une première machine d'usinage (2) avec au moins un piston mobile (5) pour séparer, de préférence estamper ou estamper-évacuer, une pièce (8),
- une autre machine d'usinage (3), et
- au moins une unité de capteur (12) sur l'installation d'usinage (1), entre la première machine d'usinage (2) et l'autre machine d'usinage (3) réalisée pour détecter sans contact, de préférence de manière optique, un contour d'une surface de coupe générée par le piston (5) sur la pièce (8) et disposée pour détecter en ligne dans l'installation d'usinage (1).

10. Installation d'usinage selon la revendication 9, dans laquelle la pièce (8) peut être déplacée lors de la détection par l'unité de capteur (12) avec un ensemble de transport (7) dans l'installation d'usinage (1).

11. Installations d'usinage selon la revendication 9 ou 10, comprenant une matrice creuse (6) faisant face au piston (5), dans lesquelles l'unité de capteur (12) est disposée dans la matrice creuse (6).

12. Installation d'usinage selon l'une quelconque des revendications 9 à 11, dans laquelle l'unité de capteur (12) est disposée de manière à pouvoir être déplacée pour détecter la surface de coupe.

13. Installation d'usinage selon l'une quelconque des revendications 9 à 12, dans laquelle la première machine d'usinage (2) comprend un porte-outil (4) pour recevoir l'au moins un piston (5), dans laquelle l'unité de capteur (12) est disposée sur le porte-outil (4).
